# EUROPÄISCHE PATENTSCHRIFT

(11) **EP 4 440 912 B1**
(45) Veröffentlichungstag und Bekanntmachung des Hinweises auf die Patenterteilung: **14.01.2026**
(21) Anmeldenummer: 22813556.2
(22) Anmeldetag: 07.11.2022
(51) Int. Cl.: B62J 9/25, B62J 35/00

(54) **TANKEINRICHTUNG FÜR EIN KRAFTRAD SOWIE GEPÄCKSYSTEM FÜR EIN KRAFTRAD**
REFUELLING SYSTEM FOR A MOTORBIKE AND LUGGAGE SYSTEM FOR A MOTORBIKE
DISPOSITIF DE RAVITAILLEMENT EN CARBURANT POUR UN MOTOCYCLE ET SYSTÈME DE BAGAGE POUR UN MOTOCYCLE

(30) Priorität: 02.12.2021 DE 102021131787
(43) Veröffentlichungstag der Anmeldung: 09.10.2024
(73) Patentinhaber: Bayerische Motoren Werke Aktiengesellschaft, 80809 München (DE)
(72) Erfinder: WAMSER, Rainer, 82275 Emmering (DE); BAPTIST, Eva, 72401 Haigerloch (DE); MAYER, Jean-Thomas, 81669 München (DE)
(86) Internationale Anmeldenummer: PCT/EP2022/080952
(87) Internationale Veröffentlichungsnummer: WO 2023/099122

(56) Entgegenhaltungen:
- DE-A1- 3 505 703
- DE-U1- 202004 014 057
- DE-U1- 202010 005 660

## Beschreibung

Die vorliegende Erfindung betrifft ein Gepäcksystem für ein Kraftrad.

Aus der US 6 974 059 B2 ist bereits ein Befestigungssystem zur Montage eines Gepäckstücks an einem Benzintank eines Motorrads bekannt. Dieses Befestigungssystem besteht aus zwei separaten Teilen, einer Tankverrieglungsmanschette und einer Befestigungsmanschette, die an dem Gepäckstück befestigt ist. Die Tankverrieglungsmanschette ist an einem Tankdeckel des Benzintanks zu befestigen. Dieser Tankdeckel befindet sich auf einer flachen Oberseite des Benzintanks und kann mithilfe von Befestigungsschrauben, die durch einen einen umlaufenden Befestigungsflansch des Tankdeckels bildenden Randflansch hindurchgeführt werden, an dem Benzintank befestigt werden.

Aus der DE 20 2013 011 944 U1 ist ein Koffer für Motorräder bekannt, wobei der Koffer einen Grundkörper umfasst, an welchem eine Haltestruktur gehalten ist, welche wiederum an einer festen Struktur des Motorrads festlegbar ist.

Die DE 35 05 703 A1 offenbart eine lösbare Befestigung eines formstabilen Gepäckbehälters an einem Kraftstofftank eines Motorrads.

Weiterhin ist aus der DE 20 2004 014 057 U1 ein Tankrucksack-Adapter mit zwei kuppelbaren Bauteilen bekannt, von denen eines an einem Tankrucksack und das andere an einem Tankverschlussdeckel anbringbar oder angebracht ist.

Überdies offenbart die DE 20 2010 005 660 U1 einen Tankrucksack für Krafträder, mit magnetischen Haltemitteln zum Befestigen des Tankrucksacks am Tank.

Aufgabe der vorliegenden Erfindung ist es, eine Lösung zu schaffen, die ein besonders einfaches und sicheres Befestigen eines Tankrucksacks an einem Kraftrad ermöglicht.

Diese Aufgabe wird erfindungsgemäß durch die Gegenstände der unabhängigen Patentansprüche gelöst. Weitere mögliche Ausgestaltungen der Erfindung sind in den Unteransprüchen, der Beschreibung und den Figuren offenbart.

Die Erfindung betrifft ein Gepäcksystem für ein Kraftrad, welches eine Tankeinrichtung umfasst. Bei dem Kraftrad handelt es sich um ein durch Maschinenkraft bewegtes, nicht an Gleise gebundenes, auf nicht mehr als zwei Rädern laufendes Landfahrzeug. Bei dem Kraftrad kann es sich beispielsweise um ein Motorrad, um einen Motorroller oder um ein Mofa handeln. Die Tankeinrichtung umfasst einen Kraftstoffbehälter, welcher dazu eingerichtet ist, einen Kraftstoff für das Kraftrad aufzunehmen. Mittels des Kraftstoffs ist das Kraftrad antreibbar. Für das Antreiben des Kraftrads kann der Kraftstoff einer Verbrennungskraftmaschine des Kraftrads zugeführt werden und in der Verbrennungskraftmaschine verbrannt werden. Der Kraftstoffbehälter definiert ein Tankvolumen, in welchem der Kraftstoff aufgenommen werden kann. Die Tankeinrichtung umfasst des Weiteren einen Tankdeckel, welcher eine Tankeinfüllöffnung des Kraftstoffbehälters freigeben und verschließen kann. Über die Tankeinfüllöffnung kann Kraftstoff in das Tankvolumen des Kraftstoffbehälters beispielsweise im Rahmen eines Tankvorgangs eingefüllt werden. Der Tankdeckel kann beispielsweise einen an dem Kraftstoffbehälter gehaltenen Befestigungsflansch und ein relativ zu dem Befestigungsflansch um eine Schwenkachse verschwenkbares Deckelelement aufweisen. Der Befestigungsflansch kann die Tankeinfüllöffnung umfangsseitig umschließend an dem Kraftstoffbehälter angeordnet sein, wobei das Deckelelement dazu eingerichtet ist, die Tankeinfüllöffnung in einer Freigabestellung des Deckelelements freizugeben und in einer Schließstellung das Deckelelement zu verschließen.

Die Tankeinrichtung umfasst des Weiteren eine Befestigungseinrichtung, welche wenigstens zwei Befestigungselemente umfasst. Diese Befestigungselemente sind positionsfest an dem Kraftstoffbehälter angeordnet. Weiterhin kann über die Befestigungselemente ein Tankrucksack ausschließlich über den Kraftstoffbehälter an der Tankeinrichtung befestigt werden. Das bedeutet, dass ein Befestigen des Tankrucksacks an der Tankeinrichtung über den Tankdeckel unterbleibt. Die Befestigungselemente können zum Befestigen des Tankrucksacks an der Tankeinrichtung mit korrespondierenden Halteelementen des Tankrucksacks in Eingriff gebracht werden. Der Tankrucksack kann somit bei Einbau der Tankeinrichtung in dem Kraftrad über die wenigstens zwei Befestigungselemente an dem Kraftrad befestigt werden. Wird der Tankrucksack an der Tankeinrichtung über die Befestigungseinrichtung gehalten, dann kann der Tankrucksack den Tankdeckel nach außen überdeckend angeordnet sein. Durch das Halten der Befestigungselemente ausschließlich an dem Kraftstoffbehälter und infolgedessen das Befestigen des Tankrucksacks ausschließlich über den Kraftstoffbehälter an der Tankeinrichtung kann eine Krafteinleitung über den Tankrucksack in den Tankdeckel der Tankeinrichtung besonders gering gehalten werden, insbesondere vollständig vermieden werden. Infolgedessen können sicherheitsrelevante Anforderungen eingehalten werden, welche besagen, dass eine Beschädigungsgefahr des Tankdeckels der Tankeinrichtung besonders gering zu halten ist. Durch die positionsfeste Anordnung der Befestigungselemente an dem Kraftstoffbehälter können die Befestigungselemente besonders einfach und schnell mit den Halteelementen des Tankrucksacks in Eingriff gebracht werden, wodurch der Tankrucksack besonders einfach und schnell an der Tankeinrichtung befestigt werden kann. Ein zeitaufwendiges Ausrichten der Befestigungselemente zueinander bzw. zu den Halteelementen des Tankrucksacks kann somit entfallen.

Weiterhin umfasst das Gepäcksystem den Tankrucksack, welcher wenigstens zwei mit den Befestigungselementen korrespondierende Halteelemente aufweist. Sind im Folgenden sowohl die Befestigungselemente als auch die Halteelemente gemeint, dann werden diese allgemein als Elemente bezeichnet. Die Elemente sind dazu eingerichtet, zum Befestigen des Tankrucksacks an der Tankeinrichtung miteinander in Eingriff gebracht zu werden, wodurch der Tankrucksack ausschließlich über den Kraftstoffbehälter an der Tankeinrichtung gehalten wird. Das bedeutet, dass jeweilige Befestigungselemente mit den zugeordneten korrespondierenden Halteelementen in Eingriff gebracht werden, um den Tankrucksack an dem Kraftstoffbehälter zu befestigen. Das Gepäcksystem umfasst somit die Tankeinrichtung sowie den Tankrucksack, wobei der Tankrucksack separat und somit beabstandet zu der Tankeinrichtung gelagert werden kann oder an der Tankeinrichtung gehalten sein kann. Für ein besonders einfaches Befestigen des Tankrucksacks an der Tankeinrichtung kann es vorgesehen sein, dass die Halteelemente positionsfest an dem Tankrucksack angeordnet sind, wodurch die Halteelemente besonders einfach und schnell mit den positionsfest an dem Kraftstoffbehälter angeordneten den jeweiligen Halteelementen zugeordneten Befestigungselementen in Eingriff gebracht werden können. Insbesondere können die jeweiligen Befestigungselemente mit den zugeordneten Halteelementen einen jeweiligen Schnellverschluss ausbilden, über welchen der Tankrucksack besonders einfach und schnell an dem Kraftstoffbehälter befestigt werden kann. Das Gepäcksystem ermöglicht somit ein besonders bequemes, einfaches und schnelles Befestigen des Tankrucksacks an der Tankeinrichtung.

Bei der Erfindung ist es vorgesehen, dass wenigstens eines der Elemente als Haken ausgebildet ist, welcher dazu eingerichtet ist, einen Bügel des korrespondierenden Elements zu umgreifen. Mit anderen Worten kann der Haken in einen Bügel des korrespondieren Elements eingehakt werden und somit den Bügel umgreifen. Unter dem Bügel ist ein schlanker Gegenstand zu verstehen, welcher gebogen oder gerade ausgebildet sein kann. Das Verhaken des als Haken ausgebildeten Elements mit dem Bügel des korrespondierenden Elements ermöglicht ein besonders einfaches Verbinden sowie ein besonders sicheres Halten der miteinander in Eingriff gebrachten Elemente aneinander.

In diesem Zusammenhang kann weiterhin vorgesehen sein, dass der Haken dazu eingerichtet ist, relativ zu der Befestigungseinrichtung verschwenkt zu werden, während der Tankrucksack an der Tankeinrichtung gehalten ist, und das wenigstens eine den Haken aufweisende Element zusätzlich eine Federeinrichtung umfasst, welche dazu eingerichtet ist, den Haken in einer vorgegebenen Schließstellung für ein Verhaken mit dem Bügel zu halten. Das bedeutet, dass der Haken von dem Bügel lediglich bei Überwinden einer Federkraft der Federeinrichtung gelöst werden kann. Die Federeinrichtung dient somit dazu, zu vermeiden, dass der Haken ungewünscht von dem Bügel gelöst wird. Der Haken ist lediglich unter Überwindung der Federkraft der Federeinrichtung aus der vorgegebenen Schließstellung in eine vorgegebene Offenstellung verstellbar, in welcher der Haken von dem Bügel gelöst werden kann. Infolgedessen ermöglicht die Federeinrichtung ein besonders sicheres Halten des Hakens an dem Bügel und somit ein sicheres Halten des Tankrucksacks an der Tankeinrichtung. Der Haken kann dazu eingerichtet sein, sowohl relativ zu der Befestigungseinrichtung als auch relativ zu einer Komponente des Tankrucksacks, beispielsweise einer Trägerplatte des Tankrucksacks, verschwenkt zu werden.

Alternativ oder zusätzlich ist es vorgesehen, dass der Bügel eine Schwenkachse für den Tankrucksack definiert, um welche der an der Tankeinrichtung gehaltene Tankrucksack verschwenkt werden kann, wodurch die Tankeinfüllöffnung freigegeben werden kann. Der Tankrucksack kann somit um die Schwenkachse zwischen einer den Tankdeckel nach außen überdeckenden Überdeckungsstellung und einer den Tankdeckel nicht nach außen überdeckenden Wegverschwenkstellung verschwenkt werden. Somit ist in der Wegverschwenkstellung der Tankrucksack derart von dem Tankdeckel weg verschwenkt, dass das Deckelelement geöffnet und somit die Einfüllöffnung freigegeben werden kann. Ein vollständiges Lösen des Tankrucksacks von der Tankeinrichtung für ein Befüllen des Kraftstoffbehälters mit dem Kraftstoff über die Tankeinfüllöffnung bei einem Tankvorgang ist somit nicht zwingend notwendig. Während des Tankvorgangs kann somit der Tankrucksack weiterhin an der Tankeinrichtung gehalten sein. Nach Abschluss des Tankvorgangs kann mittels des Deckelelements die Tankeinfüllöffnung verschlossen werden und anschließend der Tankrucksack aus der Wegverschwenkstellung in die Überdeckungsstellung rückverschwenkt werden. In dieser Überdeckungsstellung liegt der Tankrucksack besonders nah an dem Kraftstoffbehälter an, wodurch der Tankrucksack besonders sicher an der Tankeinrichtung gehalten werden kann und darüber hinaus eine besonders vorteilhafte Aerodynamik des Kraftrads erreicht werden kann. Der die Schwenkachse für den Tankrucksack definierende Bügel ermöglicht somit, dass während des Tankvorgangs der Tankrucksack durchgängig an der Tankeinrichtung gehalten werden kann.

In einer weiteren möglichen Ausgestaltung der Erfindung ist es vorgesehen, dass wenigstens eines der Elemente ein Fach aufweist, in welches zum In-Eingriff-Bringen der Elemente ein Einschubbereich des korrespondierenden Elements eingesteckt werden kann. Unter dem Fach ist insbesondere ein durch festes, insbesondere starres Material von einer angrenzenden Umgebung abgeteilter, der Aufbewahrung von etwas dienender Teil des Elements zu verstehen. In dieses Fach kann der Einschubbereich des korrespondierenden Elements eingesteckt werden, wodurch die miteinander korrespondierenden Elemente aneinander befestigt werden können. Der Einschubbereich des korrespondierenden Elements kann beispielsweise als Schuh oder als Haken ausgebildet sein, welcher zum In-Eingriff-Bringen der Elemente in das Fach eingesteckt werden kann. In dem eingesteckten Zustand des Einschubbereichs in das Fach kann das Fach den Einschubbereich des korrespondierenden Elements umfangsseitig vollständig umschließen, so dass der Einschubbereich senkrecht zu einer Einschubrichtung des Einschubbereichs in das Fach umfangsseitig nach außen vollständig von dem Fach umschlossen ist. Hierdurch kann der Einschubbereich des einen Elements besonderes sicher in dem Fach des anderen Elements gehalten werden.

In einer weiteren möglichen Ausgestaltung der Erfindung ist es vorgesehen, dass der Tankrucksack wenigstens ein Pufferelement aufweist, über welches der Tankrucksack auf dem Kraftstoffbehälter abgestützt werden kann. Diese Pufferelemente sind insbesondere elastisch ausgebildet. Beispielsweise handelt es sich bei dem wenigstens einen Pufferelement um einen Gummipuffer. Mittels des wenigstens einen Pufferelements kann der Tankrucksack federnd auf dem Kraftstoffbehälter abgestützt und gelagert werden. Eine Krafteinwirkung von dem Tankrucksack auf den Kraftstoffbehälter in einer Auflagerichtung des wenigstens einen Pufferelements auf dem Kraftstoffbehälter kann somit abgefedert werden, wodurch eine Beschädigungsgefahr des Kraftstoffbehälters besonderes gering gehalten werden kann. Weiterhin kann mittels des wenigstens einen Pufferelements ein unmittelbares Aufliegen des Tankrucksacks auf dem Tankdeckel vermieden werden, wodurch eine Gefahr einer Krafteinleitung in den Tankdeckel über den Tankrucksack besonders gering gehalten werden kann.

In einer weiteren möglichen Ausgestaltung der Erfindung ist es vorgesehen, dass der Tankrucksack eine steife Trägerplatte aufweist, in welcher die Halteelemente angeordnet sind. Insbesondere wird der Tankrucksack mit der steifen Trägerplatte dem Kraftstoffbehälter zugewandt an der Tankeinrichtung angeordnet bei einem Befestigen des Tankrucksacks an der Tankeinrichtung. An dieser steifen Trägerplatte kann zusätzlich das wenigstens eine Pufferelement angeordnet sein, wobei über das wenigstens eine Pufferelement die steife Trägerplatte federnd gegen den Kunststoffbehälter abgestützt werden kann. Die steife Trägerplatte kann bei einer Befestigung des Tankrucksacks an der Tankeinrichtung einen Spalt zu dem Tankdeckel aufweisen und somit beabstandet zu dem Tankdeckel angeordnet sein. Hierbei kann der Spalt insbesondere durch das wenigstens eine Pufferelement vorgehalten werden. Infolgedessen besteht kein unmittelbarer Kontakt zwischen dem Tankrucksack und dem Tankdeckel. Somit kann eine unmittelbare Kraftübertragung von dem Tankrucksack auf den Tankdeckel vermieden werden, wodurch eine Beschädigungsgefahr des Tankdeckels besonders gering gehalten werden kann. Hierbei beschreibt die Kraftübertragung eine technische Möglichkeit, eine Kraft oder ein Drehmoment von dem Tankrucksack auf den Tankdeckel zu übertragen. Es besteht somit keine unmittelbare kraftübertragende Verbindung zwischen dem Tankrucksack und dem Tankdeckel. Durch die steife Ausgestaltung der Trägerplatte kann ein Durchhängen des Tankrucksacks an seiner die Trägerplatte aufweisenden Seite zumindest im Wesentlichen vermieden werden, wodurch der unmittelbare Kontakt zwischen der Trägerplatte des Tankrucksacks und dem Tankdeckel besonders sicher unterbunden werden kann. Die steife Trägerplatte ermöglicht weiterhin ein besonders zuverlässiges Stabilisieren des Tankrucksacks.

In einer möglichen Weiterbildung der Erfindung ist es vorgesehen, dass die Befestigungseinrichtung wenigstens ein stoffschlüssig an dem Kraftstoffbehälter befestigtes Halteblech umfasst, über welches wenigstens eines der Befestigungselemente an dem Kraftstoffbehälter gehalten ist. Insbesondere kann wenigstens eines der Befestigungselemente in Fahrzeuglängsrichtung vor dem Tankdeckel und das wenigstens eine andere der Befestigungselemente in Fahrzeuglängsrichtung des Kraftrads hinter dem Tankdeckel angeordnet sein. Hierbei können beide Befestigungselemente über dasselbe Halteblech oder über jeweilige separate Haltebleche an dem Kraftstoffbehälter gehalten sein. Insbesondere sind die jeweiligen Befestigungselemente unmittelbar an dem jeweiligen zugeordneten Halteblech befestigt, wodurch die Befestigungselemente besonders sicher über das jeweilige Halteblech an dem Kraftstoffbehälter befestigt sind. Das wenigstens eine Halteblech kann beispielsweise mit dem Kraftstoffbehälter verschweißt sein, wodurch das jeweilige Halteblech besonders sicher an dem Kraftstoffbehälter gehalten ist.

In einer weiteren möglichen Ausgestaltung der Erfindung ist es vorgesehen, dass die Befestigungseinrichtung dazu eingerichtet ist, bei einer geringeren Krafteinwirkung zu versagen als der Kraftstoffbehälter. Das bedeutet, dass bei einer Krafteinleitung in die Tankeinrichtung die Befestigungseinrichtung vor dem Kraftstoffbehälter versagt. Als Versagen kann beispielsweise ein Bruch oder ein Riss der Befestigungseinrichtung auftreten. Es kann somit durch das Versagen zumindest ein Teil der Krafteinwirkung in Verformungsenergie der Befestigungseinrichtung umgewandelt werden, wodurch der Kraftstoffbehälter besonders wenig beansprucht wird. Hierdurch kann eine Beschädigungsgefahr des Kraftstoffbehälters insbesondere bei einer Krafteinwirkung auf die Tankeinrichtung über den Tankrucksack besonders gering gehalten werden.

Weitere Merkmale der Erfindung können sich aus den Ansprüchen, den Figuren und der Figurenbeschreibung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht eines Gepäcksystems für ein Kraftrad in einer ersten Ausführungsform, mit einer Tankeinrichtung, an welcher ein Tankrucksack gehalten ist, wobei aus Übersichtlichkeitsgründen der Tankrucksack lediglich ausschnittsweise dargestellt ist, und
- Fig. 2: eine schematische Perspektivansicht des Gepäcksystems in einer zweiten Ausführungsform, bei welcher die Tankeinrichtung eine Befestigungseinrichtung umfasst, welche drei Befestigungselemente aufweist, welche jeweils als Bügel ausgebildet sind.

In den Figuren sind gleiche und funktionsgleiche Elemente mit den gleichen Bezugszeichen versehen.

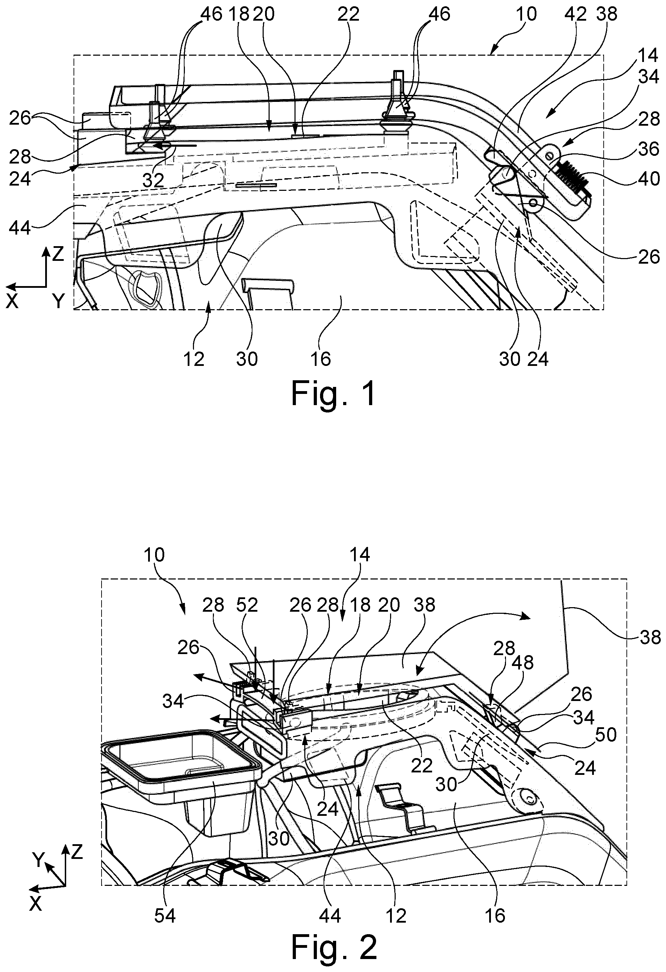

In den Figuren 1 und 2 ist jeweils ein Gepäcksystem 10 für ein Kraftrad in unterschiedlichen Ausführungsformen dargestellt. Hierbei können die jeweiligen Merkmale des in Fig. 1 gezeigten Gepäcksystems 10 und des in Fig. 2 gezeigten Gepäcksystems 10 frei miteinander kombiniert werden. Das Gepäcksystem 10 umfasst in jeder Ausführungsformen eine Tankeinrichtung 12 sowie einen Tankrucksack 14, welcher vorliegend aus Übersichtlichkeitsgründen lediglich ausschnittsweise dargestellt ist. Das Gepäcksystem 10 ermöglicht, dass bei einer Befestigung des Tankrucksacks 14 an der Tankeinrichtung 12 mittels des Tankrucksacks 14 ein Gepäckstück an dem Kraftrad transportiert werden kann.

Die Tankeinrichtung 12 umfasst einen Kraftstoffbehälter 16, welcher ein Tankvolumen umschließt, in welchem ein Kraftstoff aufgenommen werden kann. Weiterhin umfasst die Tankeinrichtung 12 einen Tankdeckel 18, der eine Tankeinfüllöffnung 20 des Kraftstoffbehälters 16 freigeben und verschließen kann. Dieser Tankdeckel 18 umfasst einen Befestigungsflansch 22, über welchen der Tankdeckel 18 an dem Kraftstoffbehälter 16 gehalten ist, sowie ein in den Figuren nicht dargestelltes Deckelelement, welches relativ zu dem Befestigungsflansch 22 zwischen einer Offenstellung und einer Schließstellung verstellt werden kann. In der Offenstellung des Deckelelements ist die Tankeinfüllöffnung 20 des Kraftstoffbehälters 16 freigegeben, so dass Kraftstoff über die Tankeinfüllöffnung 20 in den Kraftstoffbehälter 16 eingefüllt werden kann. In der Schließstellung des Deckelelements ist die Tankeinfüllöffnung 20 verschlossen.

Die Tankeinrichtung 12 umfasst weiterhin eine Befestigungseinrichtung 24, mittels welcher der Tankrucksack 14 ausschließlich über den Kraftstoffbehälter 16 an der Tankeinrichtung 12 befestigt werden kann. Vorliegend umfasst die Befestigungseinrichtung 24 in jeder der dargestellten Ausführungsformen drei Befestigungselemente 26, welche positionsfest an dem Kraftstoffbehälter 16 angeordnet sind. In jeder der dargestellten Ausführungsformen sind zwei der Befestigungselemente 26 in Fahrzeuglängsrichtung x des Kraftrads vor dem Tankdeckel 18 und das dritte Befestigungselement 26 in Fahrzeuglängsrichtung x hinter dem Tankdeckel 18 der Tankeinrichtung 12 angeordnet. Die jeweiligen Befestigungselemente 26 sind dazu eingerichtet, mit korrespondierenden Halteelementen 28 des Tankrucksacks 14 in Eingriff gebracht zu werden, wodurch der Tankrucksack 14 über die Befestigungselemente 26 an dem Kraftstoffbehälter 16 befestigt werden kann. Vorliegend weist der Tankrucksack 14 für jedes Befestigungselement 26 ein korrespondierendes Halteelement 28 auf.

Für ein besonders sicheres Halten der Befestigungselemente 26 an dem Kraftstoffbehälter 16 umfasst die Tankeinrichtung 12 vorliegend zwei Haltebleche 30, welche jeweils stoffschlüssig mit dem Kraftstoffbehälter 16 verbunden sind, vorliegend verschweißt sind. Vorliegend sind die beiden in Fahrzeuglängsrichtung x vor dem Tankdeckel 18 angeordneten Befestigungselemente 26 über ein gemeinsames Halteblech 30 an dem Kraftstoffbehälter 16 befestigt. Das dritte Befestigungselement 26 ist über das weitere Halteblech 30 an dem Kraftstoffbehälter 16 gehalten.

Bei der in Fig. 1 gezeigten ersten Ausführungsform der Tankeinrichtung 12 sind die beiden in Fahrzeuglängsrichtung x vor dem Tankdeckel 18 angeordneten Befestigungselemente 26 als Fächer ausgebildet, in welche jeweilige zugeordnete Einschubbereiche der korrespondierenden Halteelemente 28 in einer Einschubrichtung 32 eingeschoben werden können. Das in Fahrzeuglängsrichtung x hinter dem Tankdeckel 18 angeordnete Befestigungselement 26 weist einen in Fig. 1 lediglich angedeuteten Bügel 34 auf, welcher von dem zugeordneten Halteelement 28 umgriffen werden kann. Das Halteelement 28 des Tankrucksacks 14, welches dazu eingerichtet ist, den Bügel 34 zu umgreifen, ist vorliegend als Schnapphaken ausgebildet. Dieser Schnapphaken umfasst einen Haken 36, welcher dazu eingerichtet ist, relativ zu der Befestigungseinrichtung 24 verschwenkt zu werden, während der Tankrucksack 14 an der Tankeinrichtung 12 gehalten ist. Vorliegend ist der Haken 36 dazu ausgebildet, relativ zu einer Trägerplatte 38 des Tankrucksacks 14 verschwenkt zu werden, um den Bügel 34 zu umgreifen. Der Schnapphaken umfasst vorliegend zusätzlich zu dem Haken 36 eine Federeinrichtung 40, welche dazu eingerichtet ist, den Haken 36 in einer vorgegebenen Schließstellung zu halten, in welcher der Haken 36 den Bügel 34 umgreift. Somit kann der Haken 36 lediglich durch Überwinden einer Federkraft der Federeinrichtung 40 von dem Bügel 34 gelöst werden. Für ein Befestigen des Tankrucksacks 14 an der Tankeinrichtung 12 ist es somit bei der ersten Ausführungsform vorgesehen, dass die Einschubbereiche der in Fahrzeuglängsrichtung x vorderen Halteelemente 28 in die von den in Fahrzeuglängsrichtung x vorderen Befestigungselementen 26 bereitgestellten Fächer eingeschoben werden und anschließend der Haken 36 in Eingriff mit dem Bügel 34 gebracht wird.

Um eine genaue Positionierung des Hakens 36 relativ zu dem Bügel 34 in Fahrzeugquerrichtung y zu ermöglichen, kann zusätzlich eine Führungseinrichtung 42 an dem Tankrucksack 14 vorgesehen sein. Vorliegend umfasst die Führungseinrichtung 42 zwei Gabelelemente, welche jeweils gabelförmig mit zwei Zinken ausgebildet sind. Die Gabelelemente können jeweils derart auf dem Bügel 34 aufgesteckt werden, dass der Bügel 34 in einem Verbindungsbereich der beiden Zinken an dem jeweiligen Gabelelement anschlägt. Die jeweiligen Gabelelemente können den Haken 36 zumindest bereichsweise in Fahrzeugquerrichtung y an einander gegenüberliegenden Seiten nach außen hin überdecken, wodurch der Haken 36 an dem Bügel 34 in Fahrzeugquerrichtung y zentriert werden kann.

Die vorderen Befestigungselemente 26 sind vorliegend einstückig mit einem Staufach 54 ausgebildet, welches über eine Schraubverbindung an dem zugeordneten Halteblech 30 gehalten ist. Nach dem Befestigen des Staufachs 54 über das Halteblech 30 an dem Kraftstoffbehälter 16 kann eine Tankabdeckung 44 über den Kraftstoffbehälter 16 gestülpt werden und an dem Kraftstoffbehälter 16 befestigt werden. Der Bügel 34 kann über eine Schraubverbindung an dem zugeordneten Halteblech 30 gehalten sein. Für ein Befestigen des Tankrucksacks 14 an der Tankeinrichtung 12 greifen die Halteelemente 28 mit den Einschubbereichen in die einstückig mit dem Staufach 54 ausgebildeten Fächer vorne ein. Hinten wird der Tankrucksack 14 über den Schnapphaken mit der Tankeinrichtung 12 verriegelt. Eine Entriegelung des Schnapphakens kann über einen Tragegurt erfolgen, welcher an dem Haken 36 des Schnapphakens befestigt sein kann. Über ein Ziehen an dem Tragegurt kann die Federkraft der Federeinrichtung 40 überwunden und der Haken 36 von dem Bügel 34 gelöst werden.

Der Tankrucksack 14 umfasst die steife Trägerplatte 38, an welcher die Halteelemente 28 befestigt sind. An dieser Trägerplatte 38 sind zusätzlich vorliegend vier Pufferelemente 46 angeordnet, über welche die Trägerplatte 38 an der Tankeinrichtung 12 abgestützt werden kann. Der Tankrucksack 14 kann über die Pufferelemente 46 auf der Tankabdeckung 44 und über die Tankabdeckung 44 mittelbar auf dem Kraftstoffbehälter 16 abgestützt werden. Die Pufferelemente 46 sind vorliegend als Gummipuffer ausgebildet und ermöglichen ein Abstützen der Trägerplatte 38 an dem Kraftstoffbehälter 16.

Die in Fig. 2 gezeigte zweite Ausführungsform des Gepäcksystems 10 umfasst die Tankeinrichtung 12 sowie den Tankrucksack 14. Hierbei sind keine Pufferelemente 46 des Tankrucksacks 14 dargestellt, der Tankrucksack 14 kann jedoch auch in dieser Ausführungsform wenigstens ein Pufferelement 46 aufweisen. Das in Fahrzeuglängsrichtung x hinter dem Tankdeckel 18 angeordnete Befestigungselement 26 weist vorliegend den Bügel 34 auf, welcher von einem Befestigungshaken 48 des Tankrucksacks 14 umgriffen werden kann. Hierbei ist der Befestigungshaken 48 das mit dem Befestigungselement 26 korrespondierende Halteelement 28. Der Befestigungshaken 48 kann insbesondere fest und somit nicht verschwenkbar relativ zu der Trägerplatte 38 angeordnet sein. Das Umgreifen des Bügels 34 mittels des Befestigungshakens 48 ermöglicht ein Verschwenken der Trägerplatte 38 um eine durch den Bügel 34 definierte Schwenkachse 50. Hierdurch kann der Tankrucksack 14 um die Schwenkachse 50, wie in Fig. 2 angedeutet ist, von der Tankeinfüllöffnung 20 weg und somit in Fahrzeuglängsrichtung x nach hinten, und nach vorne auf die Tankeinfüllöffnung 20 zu verschwenkt werden, wodurch der Tankrucksack 14 die Tankeinfüllöffnung 20 nach außen überdeckend angeordnet werden kann. Folglich kann der Tankrucksack 14 je nach Schwenkposition um die Schwenkachse 50 die Tankeinfüllöffnung 20 freigeben oder nach außen überdecken.

Die in Fahrzeuglängsrichtung x des Kraftrads vor dem Tankdeckel 18 angeordneten vorderen Befestigungselemente 26 sind vorliegend in der zweiten Ausführungsform jeweils als Bügel 34 ausgebildet. Die mit diesen Befestigungselementen 26 korrespondierenden Halteelemente 28 des Tankrucksacks 14 sind vorliegend jeweils als Schnapphaken ausgebildet. Weiterhin sind die vorderen Befestigungselemente 26 für eine besonderes präzise Positionierung relativ zueinander über einen die Befestigungselemente 26 verbindenden Verbindungsbügel 52 miteinander verbunden.

Für ein Bereitstellen der zweiten Ausführungsform des Gepäcksystems 10 kann das Staufach 54 analog zur ersten Ausführungsform über das zugeordnete Halteblech 30 an dem Kraftstoffbehälter 16 befestigt werden. Anschließend kann die Tankabdeckung 44 über den Kraftstoffbehälter 16 übergestülpt werden. Anschließend kann der Verbindungsbügel 52 mit den Befestigungselementen 26 mittelbar über das Staufach 54 an dem zugeordneten Halteblech 30 oder unmittelbar an dem zugeordneten Halteblech 30 befestigt werden. Für ein Befestigen des Tankrucksacks 14 an der Tankeinrichtung 12 kann der Befestigungshaken 48 um den Bügel 34 des korrespondierenden Befestigungselements 26 eingehakt werden. Hierfür kann die Trägerplatte 38 des Tankrucksacks 14 in der nach hinten verschwenkten Position und somit der Wegverschwenkstellung relativ zu dem Kraftstoffbehälter 16 angeordnet werden, um ein besonders einfaches Einhaken des Befestigungshakens 48 an dem zugeordneten Bügel 34 zu ermöglichen. Nach einem Einhaken des Befestigungshakens 48 an dem zugeordneten Bügel 34 kann die Trägerplatte 38 um die Schwenkachse 50 in Fahrzeuglängsrichtung x nach vorne geklappt werden und der Tankrucksack 14 an den Befestigungselementen 26 über die Schnapphaken der vorderen Halteelemente 28 verriegelt werden. Eine jeweilige Verbindung der vorderen Halteelemente 28 mit den zugeordneten Befestigungselementen 26 kann über an den jeweiligen Schnapphaken gehaltene Tragegurte entriegelt werden, wobei durch ein Ziehen an den jeweiligen Tragegurten die Schnapphaken von den zugeordneten Bügeln 34 gelöst werden können.

Das Gepäcksystem 10 ermöglicht eine Schnellbefestigung des Tankrucksacks 14 an der Tankeinrichtung 12 ohne Spanngurte. Gängige Lösungen, bei welchen der Tankrucksack 14 an dem Tankdeckel 18 befestigt wird, bergen die Gefahr, dass der Tankdeckel 18 über eine Lebensdauer des Kraftrads undicht wird. Weiterhin kann im Falle eines Unfalls nicht gewährleistet werden, dass die Tankeinrichtung 12 dicht bleibt.

Die im Zusammenhang mit den Figuren beschriebene Tankeinrichtung 12 ermöglicht eine Anbindung des Tankrucksacks 14 an der Tankeinrichtung 12, bei welcher sicherheitsrelevante Anforderungen der Tankeinrichtung 12 eingehalten werden können.

Durch die Befestigungselemente 26 bereitgestellte fahrzeugseitige Befestigungspunkte für den Tankrucksack 14 sind vorliegend separat zum Tankdeckel 18 am Kraftstoffbehälter 16 befestigt. Die Befestigungselemente 26 sind derart ausgelegt, dass ein möglicher Schaden an den Befestigungselementen 26 und nicht am Kraftstoffbehälter 16 oder am Tankdeckel 18 auftritt. Das bedeutet, dass die Befestigungseinrichtung 24 derart ausgelegt ist, dass diese bei einer geringeren Krafteinwirkung versagt als der Kraftstoffbehälter 16. Bei der ersten Ausführungsform des Gepäcksystems 10 erfolgt die Befestigung des Tankrucksacks 14 an der Tankeinrichtung 12, indem der Tankrucksack 14 an einer Seite, vorliegend in Fahrzeuglängsrichtung x vorne, in die Tankeinrichtung 12 eingeschoben und an der anderen Seite, vorliegend in Fahrzeuglängsrichtung x hinten, an der Tankeinrichtung 12 verriegelt wird.

Die Tankabdeckung 44 kann über einen Adapterring zum Tankdeckel 18 positioniert werden. Das in Fahrzeuglängsrichtung x vor dem Tankdeckel 18 liegende Staufach 54 mit dem zugeordneten Halteblech 30 verschraubt werden, das mit dem Kraftstoffbehälter 16 verschweißt ist. Jeweilige Schraubpunkte können durch die Tankabdeckung 44 hindurchragen, wobei ein Übertragen von Kräften von den Schraubpunkten über die Tankabdeckung 44 zu dem Tankdeckel 18 zumindest im Wesentlichen vermieden wird. Somit kann ein Einleiten von Kräften über das Staufach 54 zu dem Tankdeckel 18 vermieden werden. Auf diese Schraubpunkte können die Befestigungselemente 26 für eine in Fahrzeuglängsrichtung x vordere Anbindung des Tankrucksacks 14 verschraubt werden. In Fahrzeuglängsrichtung x hinter dem Tankdeckel 18 ist das zweite Halteblech 30 mit dem Kraftstoffbehälter 16 verschweißt. An diesem zweiten Halteblech 30 ist der Bügel 34 verschraubt. Dieser Bügel 34 ist derart ausgelegt, dass er im Schadensfall als Opferteil dient.

Der Tankrucksack 14 kann an den vorderen Befestigungselementen 26 aufgenommen und an dem hinteren Befestigungselement 26 über den Schnapphaken verriegelt werden. Alternativ kann der Tankrucksack 14 an dem hinteren Befestigungselement 26 aufgenommen und an den vorderen Befestigungselementen 26 über jeweilige Schnapphaken verriegelt werden. Bei der Aufnahme des Tankrucksacks 14 über das hintere Befestigungselement 26 kann der Tankrucksack 14 um die Schwenkachse 50 verschwenkt werden, so dass der Tankrucksack 14 für ein Betanken des Kraftstoffbehälters 16 nicht von der Tankeinrichtung 12 zu entfernen ist. In jeder der erläuterten Ausführungsformen erfolgt die Verriegelung über einen jeweiligen Schnapphaken, der mit einem Tragegurt oder einem Tragegriff verbunden ist, über welchen ein Öffnen der Verriegelung erfolgen kann. Eine alternative Verriegelung jeweiliger Verbindungen des Tankrucksacks 14 mit der Tankeinrichtung 12 ist ebenfalls denkbar.

Insgesamt zeigt die Erfindung, wie ein Schnellverschluss für eine Tankrucksackanbindung des Tankrucksacks 14 an der Tankeinrichtung 12 bereitgestellt werden kann.

### Bezugszeichenliste

- 10: Gepäcksystem
- 12: Tankeinrichtung
- 14: Tankrucksack
- 16: Kraftstoffbehälter
- 18: Tankdeckel
- 20: Tankeinfüllöffnung
- 22: Befestigungsflansch
- 24: Befestigungseinrichtung
- 26: Befestigungselement
- 28: Halteelement
- 30: Halteblech
- 32: Einschubrichtung
- 34: Bügel
- 36: Haken
- 38: Trägerplatte
- 40: Federeinrichtung
- 42: Führungseinrichtung
- 44: Tankabdeckung
- 46: Pufferelement
- 48: Befestigungshaken
- 50: Schwenkachse
- 52: Verbindungsbügel
- 54: Staufach

## Patentansprüche

1. Gepäcksystem (10) für ein Kraftrad, umfassend
- eine Tankeinrichtung (12) umfassend
∘ einen Kraftstoffbehälter (16),
∘ einen Tankdeckel (18), welcher eine Tankeinfüllöffnung (20) des Kraftstoffbehälters (16) freigeben und verschließen kann, und
∘ eine Befestigungseinrichtung (24), welche wenigstens zwei Befestigungselemente (26) umfasst, welche positionsfest an dem Kraftstoffbehälter (16) angeordnet sind und über welche ein Tankrucksack (14) ausschließlich über den Kraftstoffbehälter (16) an der Tankeinrichtung (12) befestigt werden kann,
- den Tankrucksack (14), welcher wenigstens zwei mit den Befestigungselementen (26) korrespondierende Halteelemente (28) aufweist, wobei die Elemente (26, 28) dazu eingerichtet sind, zum Befestigen des Tankrucksacks (14) an der Tankeinrichtung (12) miteinander in Eingriff gebracht zu werden, wodurch der Tankrucksack (14) ausschließlich über den Kraftstoffbehälter (16) an der Tankeinrichtung (12) gehalten wird, wobei wenigstens eines der Elemente (26, 28) als Haken (36, 48) ausgebildet ist, welcher dazu eingerichtet ist, einen Bügel (34) des korrespondierenden Elements (26, 28) zu umgreifen, und
∘ der Haken (36) dazu eingerichtet ist, relativ zu der Befestigungseinrichtung (24) verschwenkt zu werden, wenn der Tankrucksack (14) an der Tankeinrichtung (12) gehalten ist, und das wenigstens eine den Haken (36) aufweisende Element (26, 28) zusätzlich eine Federeinrichtung (40) umfasst, welche dazu eingerichtet ist, den Haken (36) in einer vorgegebenen Schließstellung für ein Verhaken mit dem Bügel (34) zu halten, und/oder
∘ der Bügel (34) eine Schwenkachse (50) für den Tankrucksack (14) definiert, um welche der an der Tankeinrichtung (12) gehaltene Tankrucksack (14) verschwenkt werden kann, wodurch die Tankeinfüllöffnung (20) freigegeben werden kann.

2. Gepäcksystem (10) nach Anspruch 1,
**dadurch gekennzeichnet, dass**
wenigstens eines der Elemente (26, 28) ein Fach aufweist, in welches zum in Eingriff bringen der Elemente (26, 28) ein Einschubbereich des korrespondierenden Elements (26, 28) eingesteckt werden kann.

3. Gepäcksystem (10) nach einem der vorhergehenden Ansprüche,
**dadurch gekennzeichnet, dass**
der Tankrucksack (14) wenigstens ein Pufferelement (46) aufweist, über welches der Tankrucksack (14) auf dem Kraftstoffbehälter (16) abgestützt werden kann.

4. Gepäcksystem (10) nach einem der vorhergehenden Ansprüche,
**dadurch gekennzeichnet, dass**
der Tankrucksack (14) eine steife Trägerplatte (38) aufweist, an welcher die Halteelemente (28) angeordnet sind.

5. Tankeinrichtung (12) nach einem der vorhergehenden Ansprüche,
**dadurch gekennzeichnet, dass**
die Befestigungseinrichtung (24) wenigstens ein stoffschlüssig an dem Kraftstoffbehälter (16) befestigtes Halteblech (30) umfasst, über welches wenigstens eines der Befestigungselemente (26) an dem Kraftstoffbehälter (16) gehalten ist.

6. Tankeinrichtung (12) nach einem der vorhergehenden Ansprüche,
**dadurch gekennzeichnet, dass**
die Befestigungseinrichtung (24) dazu eingerichtet ist, bei einer geringeren Krafteinwirkung zu versagen als der Kraftstoffbehälter (16).

## Claims

1. Luggage system (10) for a motorcycle, comprising
• a tank device (12) comprising
∘ a fuel container (16),
∘ a tank cap (18) which can release and close a tank filler opening (20) of the fuel container (16), and
∘ a fastening device (24) which comprises at least two fastening elements (26) which are arranged in a fixed position on the fuel container (16) and via which a tank rucksack (14) can be fastened to the tank device (12) exclusively via the fuel container (16),
• the tank rucksack (14) which has at least two holding elements (28) corresponding to the fastening elements (26), wherein the elements (26, 28) are designed to be brought into engagement with one another for fastening the tank rucksack (14) to the tank device (12), whereby the tank rucksack (14) is held on the tank device (12) exclusively via the fuel container (16), wherein at least one of the elements (26, 28) is designed as a hook (36, 48) which is designed to encompass a bracket (34) of the corresponding element (26, 28), and
∘ the hook (36) is designed to be pivoted relative to the fastening device (24) when the tank rucksack (14) is held on the tank device (12), and the at least one element (26, 28) having the hook (36) additionally comprises a spring device (40) which is designed to hold the hook (36) in a predetermined closed position for hooking with the bracket (34), and/or
∘ the bracket (34) defines a pivot axis (50) for the tank rucksack (14) about which the tank rucksack (14) held on the tank device (12) can be pivoted, whereby the tank filler opening (20) can be released.

2. Luggage system (10) according to claim 1,
**characterized in that**
at least one of the elements (26, 28) has a compartment into which an insertion region of the corresponding element (26, 28) can be inserted for bringing the elements (26, 28) into engagement.

3. Luggage system (10) according to one of the preceding claims,
**characterized in that**
the tank rucksack (14) has at least one buffer element (46) via which the tank rucksack (14) can be supported on the fuel container (16).

4. Luggage system (10) according to one of the preceding claims,
**characterized in that**
the tank rucksack (14) has a rigid carrier plate (38) on which the holding elements (28) are arranged.

5. Tank device (12) according to one of the preceding claims,
**characterized in that**
the fastening device (24) comprises at least one retaining plate (30) fastened cohesively to the fuel container (16), via which at least one of the fastening elements (26) is held on the fuel container (16).

6. Tank device (12) according to one of the preceding claims,
**characterized in that**
the fastening device (24) is designed to fail at a lower force action than the fuel container (16).

## Revendications

1. Système de bagages (10) pour une motocyclette, comprenant
∘ un dispositif de réservoir (12) comprenant
▪ un réservoir de carburant (16),
▪ un bouchon de réservoir (18) qui peut dégager et fermer une ouverture de remplissage de réservoir (20) du réservoir de carburant (16), et
▪ un dispositif de fixation (24) qui comprend au moins deux éléments de fixation (26) qui sont disposés en position fixe sur le réservoir de carburant (16) et par l'intermédiaire desquels un sac de réservoir (14) peut être fixé au dispositif de réservoir (12) exclusivement par l'intermédiaire du réservoir de carburant (16),
∘ le sac de réservoir (14) qui présente au moins deux éléments de maintien (28) correspondant aux éléments de fixation (26), les éléments (26, 28) étant conçus pour être mis en prise l'un avec l'autre pour fixer le sac de réservoir (14) au dispositif de réservoir (12), le sac de réservoir (14) étant maintenu au dispositif de réservoir (12) exclusivement par l'intermédiaire du réservoir de carburant (16), au moins un des éléments (26, 28) étant conçu comme un crochet (36, 48) qui est conçu pour entourer un étrier (34) de l'élément correspondant (26, 28), et
▪ le crochet (36) est conçu pour être pivoté par rapport au dispositif de fixation (24) lorsque le sac de réservoir (14) est maintenu au dispositif de réservoir (12), et l'au moins un élément (26, 28) présentant le crochet (36) comprend en outre un dispositif de ressort (40) qui est conçu pour maintenir le crochet (36) dans une position de fermeture prédéfinie pour un accrochage avec l'étrier (34), et/ou
▪ l'étrier (34) définit un axe de pivotement (50) pour le sac de réservoir (14) autour duquel le sac de réservoir (14) maintenu au dispositif de réservoir (12) peut être pivoté, l'ouverture de remplissage de réservoir (20) pouvant ainsi être dégagée.

2. Système de bagages (10) selon la revendication 1,
**caractérisé en ce que**
au moins un des éléments (26, 28) présente un compartiment dans lequel une zone d'insertion de l'élément correspondant (26, 28) peut être insérée pour mettre les éléments (26, 28) en prise.

3. Système de bagages (10) selon l'une des revendications précédentes,
**caractérisé en ce que**
le sac de réservoir (14) présente au moins un élément tampon (46) par l'intermédiaire duquel le sac de réservoir (14) peut être appuyé sur le réservoir de carburant (16).

4. Système de bagages (10) selon l'une des revendications précédentes,
**caractérisé en ce que**
le sac de réservoir (14) présente une plaque support rigide (38) sur laquelle les éléments de maintien (28) sont disposés.

5. Dispositif de réservoir (12) selon l'une des revendications précédentes,
**caractérisé en ce que**
le dispositif de fixation (24) comprend au moins une tôle de maintien (30) fixée au réservoir de carburant (16) par liaison de matière, par l'intermédiaire de laquelle au moins un des éléments de fixation (26) est maintenu sur le réservoir de carburant (16).

6. Dispositif de réservoir (12) selon l'une des revendications précédentes,
**caractérisé en ce que**
le dispositif de fixation (24) est conçu pour céder à un impact de force inférieur au réservoir de carburant (16).
